# EUROPÄISCHE PATENTANMELDUNG

(11) **EP 3 597 289 A1**
(43) Veröffentlichungstag der Anmeldung: **22.01.2020**
(21) Anmeldenummer: 18184342.6
(22) Anmeldetag: 19.07.2018
(51) Int. Cl.: B01J 13/02, B01J 13/20, F28D 20/02

(54) **POLYMERGEFÜLLTE MIKROKAPSELN UND EIN VERFAHREN ZU IHRER HERSTELLUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es werden Polymergefüllte Mikrokapseln mit einer Hülle aus Aluminiumoxid-hydroxid und ein Verfahren zu ihrer Herstellung beschrieben

## Beschreibung

Die Erfindung betrifft polymergefüllte Mikrokapseln und ein Verfahren zu ihrer Herstellung.

Die Erfindung geht aus von an sich bekannten Mikrokapseln mit einem Kern-Hülle-Aufbau, bei denen die Hülle zumeist aus Polymermaterialien aufgebaut ist.

Verschiedene Matrixmaterialien können durch Zugabe von Phasenwechselmaterialien (nachstehend auch als phase change materials - PCM bezeichnet) stark verbesserte thermische Eigenschaften aufweisen. Dabei sind die PCM in der Lage, bei einer Temperaturerhöhung durch einen endothermen Phasenübergang (i.d.R. Schmelzen), thermische Energie (latente Wärme) zu speichern und diese, bei einer anschließenden Temperaturerniedrigung reversibel durch einen exothermen Phasenübergang (i.d.R. Erstarren), wieder freizusetzen. Durch diesen Effekt können solche Materialien zur Dämpfung von Temperaturschwankungen in Gebäuden oder allgemein zur Speicherung von thermischer Energie (Latentwärmespeicher) verwendet werden.

Die Tatsache, dass PCM in ihrer ,aktivierten' Form flüssig sind, erfordert deren Verkapselung, um eine Auslaugung und anschließende Verteilung im Matrixmaterial zu vermeiden. Dabei können die Kapseln, je nach Herstellverfahren und Anwendungsbereich, Größen zwischen wenigen Mikrometern (sog. Mikrokapseln) und mehreren Zentimetern (sog. Makrokapseln) annehmen. Häufig sind die verwendeten PCM langkettige organische Moleküle, z.B. Paraffine oder oligomere Ethylenoxide. Auch die Kapselhüllen (Mikro- oder Makro-) werden hauptsächlich aus polymeren Materialien, z.B. Acrylsäure-basierenden Polymeren oder anderen Kunststoffen aufgebaut.

Bekanntermaßen sind die meisten organischen Verbindungen sowie die meisten Kunststoffe bei Flammeneinwirkung brennbar. Daher müssen ihnen für Anwendungen in bestimmten Bereichen, z.B. beim Bau oder in Möbeln, Flammschutzmittel zugesetzt werden. Der Zusatz von Flammschutzmitteln kann aber die energiespeichernde Wirkung der PCM stark beeinflussen oder sogar stark verhindern. Aus diesem Grunde werden in verschiedenen Bereichen, wo Flammschutz wichtig wird, alternative Lösungen für den Einsatz von PCM gesucht.

Aus der WO2008071649A2 sind Mikrokapseln bekannt, wobei die Kernmaterialien lipophil sind und die Hülle aus einem Polymer besteht, insbesondere aus Polyacrylsäure. Die Herstellung dieser Mikrokapseln erfolgt durch Grenzflächenpolymerisation. Diese Mikrokapseln finden Verwendung in Textilien, Bindebaustoffen und Wärmeträgerflüssigkeiten. Eine Anwendung zum Flammschutz findet sich hierin nicht.

Aus der Offenlegungsschrift DE19749731A1 sind Mikrokapseln bekannt, die als Latentwärmespeicher genutzt werden können. Auch hierbei liegen lipophile Kernmaterialien vor, die entweder Einzelverbindungen oder Mischungen mehrerer Komponenten darstellen. Die Hülle dieser Mikrokapseln besteht aus einem Polymer, insbesondere aus Polyacrylsäure, und wird ebenfalls durch Grenzflächenpolymerisation hergestellt. Diese Mikrokapseln finden Anwendung in verschiedenen mineralischen oder polymerbasierten Werkstoffen.

Aus der Schrift Renewable and Sustainable Energy Reviews; 15 (2011) 1675 ist die Verwendung von Polyethylenglykolen als PCM grundsätzlich bekannt. Hinweise auf eine Verkapselung finden sich hierin jedoch nicht.

Die Offenlegungsschrift DE102010047149 A1 benennt u.a. die Anwendung von Paraffinen in Verbindung mit Polyethylenglykolen als Latentwärmespeicher für die Ausrüstung von Baumaterialien.

Aus der Offenlegungsschrift WO2009138990 A1 ist ein Mikrokapsel-Material bekannt geworden, das außer dem polymeren Hüllmaterial ein anorganisches Kernmaterial, insbesondere ein wärmeleitendes Material und ein Trockenmittel enthält.

Alle oben genannten Mikrokapsel-Materialien beruhen auf einem Kern-Hülleaufbau, der Polymermaterialien als Hüllmaterial vorsieht.

Die Aufgabe der vorliegenden Erfindung besteht darin, ein Mikrokapsel-Material, insbesondere für den Einsatz im Flammschutz für Kunststoffe, bereitzustellen.

Es wurde eine Möglichkeit gefunden, Mikrokapseln mit Kapselhüllen (sog. Core-Shell-Partikel) anstatt auf der Basis organischer (und somit brennbarer) Materialien, auf der Basis von anorganischem (und somit nicht brennbarem) Aluminiumoxid-hydroxid (Al(O)OH) in überraschender Weise einfach herzustellen.

Gegenstand der Erfindung sind mit einem Polymer, insbesondere mit einem Polyalkylenoxid, als Kern gefühlte Mikrokapseln, dadurch gekennzeichnet, dass sie eine Hülle aus Aluminiumoxid-hydroxid (AL(O)OH) aufweisen.

Aluminiumoxid-hydroxid ist in der Literatur als effizientes Flammschutzmittel grundsätzlich bekannt. Die Flammschutzwirkung beruht möglicherweise auf folgendem Mechanismus: Bei Flammeneinwirkung wird pro zwei Moleküle Al(O)OH unter Bildung von Al₂O₃ ein Wassermolekül (H₂O) abgespalten welches somit zur aktiven Kühlung des Systems beiträgt. Das gebildete Al₂O₃ wirkt zusätzlich als nicht brennbarer Krustenbildner.

Die neuen Kapseln konnten insbesondere dazu verwendet werden, Polyethylenoxide (PEO) mit verschiedenen Polymerisationsgraden, in die anorganische Hülle einzulagern. In den gefüllten Kapseln konnte anschließend eine reversible Speicherung von thermischer Energie nachgewiesen werden.

Bevorzugt weisen die neuen Mikrokapseln einen mittleren Durchmesser von 0,5 bis 10 µm bevorzugt von 1 bis 8 µm auf.

In einer bevorzugten Ausführung liegt die mittlere Wandstärke der Hülle der Mikrokapseln von 0,2 bis 1 µm. Besonders bevorzugt liegt die Wandstärke der Mikrokapselhülle im Bereich von 0,2 bis 1 µm.

Eine weitere bevorzugte Ausführungsform der neuen Mikrokapseln ist dadurch gekennzeichnet, dass das Kernpolymer ein Polyalkylenoxid, insbesondere ein Polyethylenglykol ist.

Besonders bevorzugt ist das Kernpolymer ein Polyethylenglykol mit einem mittleren Molekulargewicht Mw (Gewichtsmittel) von 300 bis 3000, insbesondere von 400 bis 2000, besonders bevorzugt von 500 bis 1000.

In diesem Zusammenhang wurde, basierend auf der Modifikation von aus früheren Publikationen bekannten Syntheserouten, auch ein effektives vergleichsweise einfaches technisches Verfahren zur Herstellung der oben beschriebenen verkapselten PCMs entwickelt. Bei diesem Verfahren wird insbesondere eine sogenannte One-Pot-Autoklavenreaktion unter erhöhtem Druck eingesetzt. Der Vorteil gegenüber konventionellen Syntheserouten ist eine einstufige Reaktionsführung. Dabei werden beispielsweise alle Reaktanden zusammen in Wasser gelöst und im Autoklaven erhitzt. Nach dem raschen Abkühlen werden die Kapseln als wässrige Dispersion erhalten. Ein darauffolgender Waschschritt führt zum Entfernen von nichtverkapseltem Kernmaterial.

Gegenstand der Erfindung ist auch ein Verfahren zur Herstellung der neuen Mikrokapseln, bei dem eine wässrige Lösung eines Aluminiumsalzes, bevorzugt von Aluminiumsulfat, und eines Polyalkylenoxids, insbesondere ein Polyethylenglykols, und Harnstoff hergestellt wird und die Lösung in einem Autoklaven aufgeheizt und bei einer Temperatur von min. 120°C, bevorzugt min. 150°C, jedoch unterhalb des dem Druck entsprechenden Siedepunkts der Lösung für einen Zeitraum von min. 30 Min, behandelt und anschließend schlagartig auf Raumtemperatur abkühlt wird und die gebildeten Mikrokapseln vom Lösungsmittel isoliert werden.

In einer bevorzugten Ausführung des neuen Verfahrens beträgt das Molverhältnis von Aluminiumsalz zu Harnstoff von 1:1 bis 1:10.

In einer weiteren bevorzugten Ausführungsform des neuen Verfahrens wird das isolierte Pulver in zwei Schritten gewaschen, wobei in einem ersten Schritt protische Lösungsmittel, insbesondere Mischungen von C₁- bis C₅-Alkoholen mit Polyalkylenoxid, insbesondere einem Polyethylenglykol, und gegebenenfalls Wasser verwendet werden und in einem zweiten Schritt ein aprotisches unpolares Lösungsmittel zum Waschen verwendet wird, insbesondere ein C₅- bis C₈-Alkan, besonders bevorzugt Hexan.

Weiterer Gegenstand der Erfindung ist die Verwendung der neuen Mikrokapseln als Latentwärmespeicher.

Bevorzugt ist die Verwendung der neuen Mikrokapseln als flammschützendes Additiv in Bau- und Konstruktionsmaterialien für Gebäude, Fahrzeuge, Schiffe und Flugzeuge, sowie zur Dämpfung von Temperaturschwankungen in Gebäuden oder zur Speicherung von thermischer Energie (Latentwärmespeicher) in Kompositmaterial enthaltend die Mikrokapseln.

Die neuen Mikrokapseln eignen sich insbesondere als flammschützendes Additiv für die folgenden Werkstoffe:
Farben, Lacke, Klebstoffe, Dichtstoffe, Zement, Gips, Verputzwerkstoffe, Estrichmaterial, Zellstoffmaterial, Fasern, Kunststoffe, insbesondere thermoplastische Kunststoffe, bevorzugt thermoplastische Kunststoffe der Reihe: Polyurethane, Polycarbonate, Polyester, Polypropylen, Polyethylen, oder duroplastische Polymere, insbesondere duroplastische Polyurethane oder Polyester.

Die Werkstoffe mit dem neuen flammschützenden Additiv finden Verwendung in: Strukturbaustoffen, Dämmstoffen, Gipsplatten, Rauhfasertapeten, Wandfarben, Bodenbeschichtungen, Textilbeschichtungen etc.

Weiterhin finden die Werkstoffe mit den neuen Mikrokapseln als flammschützendem Additiv Verwendung in den folgenden Anwendungen: Herstellung von Matratzen, Kissen, Decken und Möbelstrukturen.

Die Erfindung wird nachfolgend anhand der Figuren durch die Beispiele, welche jedoch keine Beschränkung der Erfindung darstellen, näher erläutert.

Es zeigen:
- Fig. 1: eine Mikrofotografie (REM) eines erfindungsgemäßen Mikrokapsel-Materials
- Fig. 2: eine Mikrofotographie einer aufgebrochenen Mikrokapsel, welche die Hüllendicke zeigt.
- Fig. 3: Heiz- und Kühlkurven aus der DSC Analyse, welche den PCM-Effekt der Mikrokapseln belegen.

### Beispiele

### Eingesetzte Materialien:

Alle Reagenzien wurden bei Sigma Aldrich bezogen und in *p.a.* Qualität verwendet.

### Herstellvorschrift für Mikrokapseln:

Die Herstellung der Mikrokapseln wurde in Anlehnung an die J. Phys. Chem. C 2009, 113, 14739-14746 durchgeführt. Die Vorschrift wurde jedoch durch Ersetzen von Natriumtartrat durch PEG grundsätzlich abgewandelt.

### Beispiel 1:

die Synthese von Mikrokapseln auf Basis von Polyethylenglykol 600 als Kernmaterial und Aluminiumoxidhydroxiden als Hülle erfolgte wie folgt:
1 mmol Al₂(SO₄)₃·18 H₂O wurden zusammen mit 4 mmol CO(NH₂)₂ in 10 mL Wasser gelöst. Dazu wurden 2 mmol PEG 600 gegeben. Die Lösung wurde in einem 20 mL Autoklaven mit Teflon-Einsatz vorgelegt. Der Autoklav wurde für 3 h auf 165 °C temperiert und anschließend sofort auf RT gekühlt. Die Reaktionsmischung wurde durch mehrmaliges Waschen mit einer 10%igen Lösung von PEG 600 in Isopropanol sowie anschließend mit Hexan aufgearbeitet. Eine Analyse des getrockneten Pulvers mittels FTIR Spektroskopie belegt die Anwesenheit von PEG und Al(O)OH. Eine weitere Analyse mittels DSC zeigt die vollständige Reversibilität von Schmelz- und Kristallisationsenthalpien und belegt somit dem PCM-effekt.

### Beispiel 2:

die Synthese von Mikrokapseln auf Basis von Polyethylenglykol 1000 als Kernmaterial und Aluminiumoxidhydroxiden als Hülle erfolgte wie folgt:
1 mmol Al₂(SO₄)₃·18 H₂O wurden zusammen mit 4 mmol CO(NH₂)₂ in 10 mL Wasser gelöst. Dazu wurde 1 mmol PEG 1000 gegeben. Die Lösung wurde in einem 20 mL Autoklaven mit Teflon-Einsatz vorgelegt. Der Autoklav wurde für 3 h auf 165 °C temperiert und anschließend sofort auf RT gekühlt. Die Reaktionsmischung wurde durch mehrmaliges Waschen mit einer 10%igen Lösung von PEG 600 in Isopropanol sowie anschließend mit Hexan aufgearbeitet. Eine Analyse des getrockneten Pulvers mittels FTIR Spektroskopie belegt die Anwesenheit von PEG und Al(O)OH.

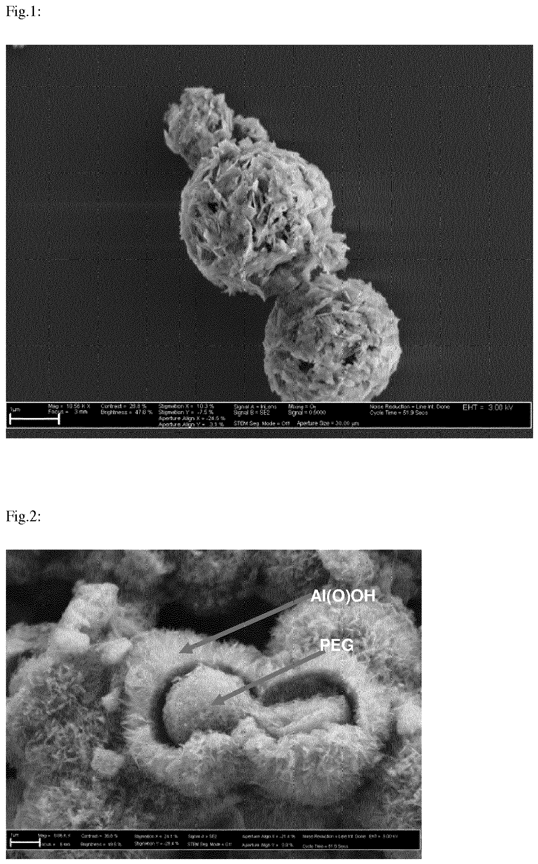

Die Figuren 1 und 2 zeigen rasterelektronenmikroskopische (REM) Aufnahmen eines Mikrokapsel-Materials, das nach dem oben beschriebenen Verfahren erhalten wurde (Balkenlänge jeweils 1µm). In Figur 1 sind Agglomerate der Mikrokapseln zu sehen, in denen die Mikrokapseln einen Durchmesser von bis zu einigen Mikrometern aufweisen. In Figur 2 sind aufgebrochene Mikrokapseln bei höherer Vergrößerung zu sehen, die eine Wandstärke von etwa 1 µm aufweisen.

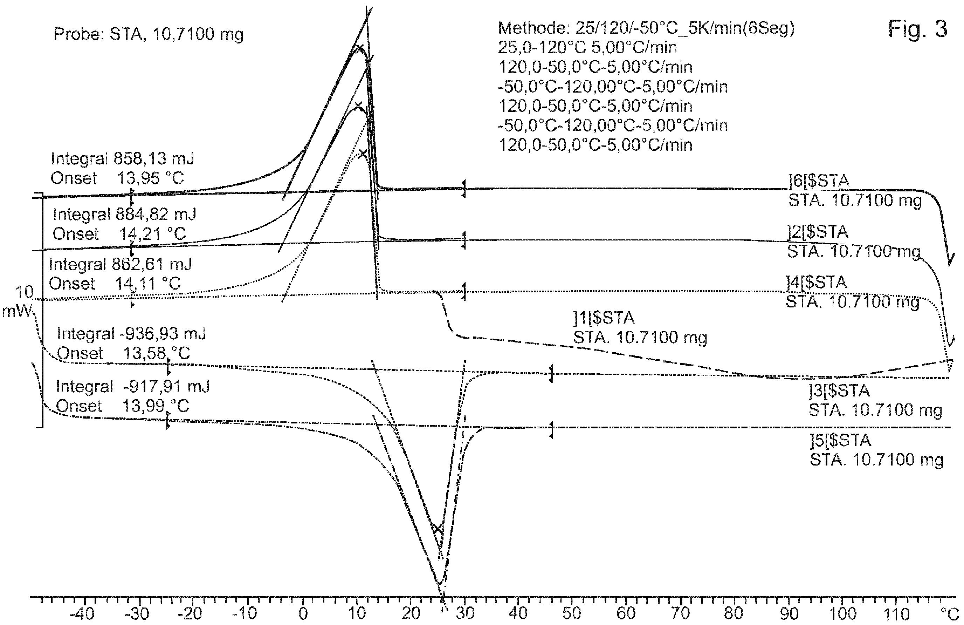

In Figur 3 sind die Wärmeflüsse während zwei Heiz- (unten) bzw. drei Kühlphasen (oben) einer DCS-Messung (differential scanning calorimetry) an einem verkapselten Phasenwechselmaterial, welches anhand der in Beispiel 1 beschriebenen Methode erhalten wurde, dargestellt. Dieses Ergebnis zeigt, dass das verkapselte Polyethylenglykol 600, zu einer reversiblen Speicherung von latenter Wärme befähigt ist, da es sowohl während dem Heizvorgang endotherme, als auch während dem Kühlvorgang exotherme Wärmeflüsse, in für Polyethylenglykol 600 charakteristischen Bereichen belegt.

## Patentansprüche

1. Mit einem Polymer als Kern gefüllte Mikrokapseln, **dadurch gekennzeichnet, dass** sie eine Hülle aus Aluminiumoxid-hydroxid (AL(O)OH) aufweisen.

2. Mikrokapseln nach Anspruch 1, **dadurch gekennzeichnet, dass** sie einen mittleren Durchmesser von 0,2 bis 10 µm bevorzugt von 0,5 bis 8 µm aufweisen.

3. Mikrokapseln nach einem der Ansprüche 1 oder 2, **dadurch gekennzeichnet, dass** die mittlere Wandstärke der Hülle 0,1 bis 1 µm beträgt.

4. Mikrokapseln nach einem der Ansprüche 1 bis 3, **dadurch gekennzeichnet, dass** das Kernpolymer ein Polyalkylenoxid, insbesondere ein Polyethylenglykol ist.

5. Mikrokapseln nach Anspruch 4, **dadurch gekennzeichnet, dass** das Kernpolymer ein Polyethylenglykol mit einem mittleren Molekulargewicht Mw von 300 bis 3000, insbesondere von 400 bis 2000, besonders bevorzugt von 500 bis 1000 ist.

6. Verfahren zur Herstellung von Mikrokapseln nach einem der Ansprüche 1 bis 5, **dadurch gekennzeichnet, dass** eine wässrige Lösung eines Aluminiumsalzes, bevorzugt von Aluminiumsulfat, und eines Polyalkylenoxids, insbesondere ein Polyethylenglykols, und Harnstoff hergestellt wird und die Lösung in einem Autoklaven aufgeheizt und bei einer Temperatur von min. 120°C, bevorzugt min. 150°C, jedoch unterhalb des dem Druck entsprechenden Siedepunkts der Lösung für einen Zeitraum von min. 30 Min, behandelt und anschließend schlagartig auf Raumtemperatur abkühlt wird und die gebildeten Mikrokapseln vom Lösungsmittel isoliert werden.

7. Verfahren nach Anspruch 6, **dadurch gekennzeichnet, dass** das Molverhältnis von Aluminiumsalz zu Harnstoff von 1:1 bis 1:10 beträgt.

8. Verfahren nach einem der Ansprüche 6 oder 7, **dadurch gekennzeichnet, dass** das isolierte Pulver in zwei Schritten gewaschen wird, wobei in einem ersten Schritt protische Lösungsmittel, insbesondere Mischungen von C₁- bis C₅-Alkoholen mit Polyalkylenoxid, insbesondere einem Polyethylenglykol, und gegebenenfalls Wasser verwendet werden und in einem zweiten Schritt ein aprotisches unipolares Lösungsmittel zum Waschen verwendet wird, insbesondere ein C₅- bis C₈-Alkan, besonders bevorzugt Hexan.

9. Verwendung der Mikrokapseln nach einem der Ansprüche 1 bis 5 als Latentwärmespeicher.

10. Verwendung der Mikrokapseln nach einem der Ansprüche 1 bis 5 als flammschützendes Additiv in Bau- und Konstruktionsmaterialien für Gebäude, Fahrzeuge, Schiffe und Flugzeuge, sowie zur Dämpfung von Temperaturschwankungen in Gebäuden oder zur Speicherung von thermischer Energie in Kompositmaterial enthaltend die Mikrokapseln.

11. Verwendung gemäß Anspruch 10, **dadurch gekennzeichnet, dass** die Mikrokapseln als flammschützendes Additiv in Werkstoffen der Reihe: Farben, Lacke, Klebstoffe, Dichtstoffe, Zement, Gips, Verputzwerkstoffe, Estrichmaterial, Zellstoffmaterial, Fasern, Kunststoffe, insbesondere thermoplastische Kunststoffe, bevorzugt thermoplastische Kunststoffe der Reihe: Polyurethane, Polycarbonate, Polyester, Polypropylen, Polyethylen, duroplastische Polymere, insbesondere duroplastische Polyurethane oder Polyester eingesetzt werden.
